# EUROPÄISCHE PATENTSCHRIFT

(11) **EP 2 242 628 B1**
(45) Veröffentlichungstag und Bekanntmachung des Hinweises auf die Patenterteilung: **27.01.2016**
(21) Anmeldenummer: 09719377.5
(22) Anmeldetag: 11.03.2009
(51) Int. Cl.: B28B 19/00, F16L 9/08, E03F 3/04, F16L 1/10, F16L 9/00, F16L 25/00

(54) **VERFAHREN ZUR HERSTELLUNG VON BETONROHREN**
METHOD FOR THE PRODUCTION OF CONCRETE PIPES
PROCÉDÉ DE FABRICATION DE TUYAUX EN BÉTON

(30) Priorität: 12.03.2008 DE 102008013768
(43) Veröffentlichungstag der Anmeldung: 27.10.2010
(73) Patentinhaber: Johann Bartlechner KG, 84558 Kirchweidach (DE)
(72) Erfinder: BARTLECHNER, Johann, 84558 Kirchweidach (DE); BARTLECHNER, Franz, 84558 Kirchweidach (DE)
(74) Vertreter: Manitz, Finsterwald & Partner GbR
(86) Internationale Anmeldenummer: PCT/EP2009/001740
(87) Internationale Veröffentlichungsnummer: WO 2009/112248

(56) Entgegenhaltungen:
- BE-A- 453 127
- DE-A1- 2 362 445
- DE-A1- 3 026 681
- DE-A1- 19 737 535
- DE-B- 1 013 560
- FR-A- 1 328 753
- FR-A- 2 468 057
- GB-A- 2 135 005

## Beschreibung

Die vorliegende Erfindung betrifft ein Verfahren zur Herstellung von Betonrohren, insbesondere für Abwasserleitungen, mit einem Kunststoffinnenrohr nach dem Oberbegriff des Anspruchs 1.

Betonrohre werden üblicherweise stehend gefertigt. Das heißt, eine der Außenform des zu fertigenden Betonrohres entsprechende Schalung wird so aufgestellt, dass die Längsachse des zu fertigenden Rohres aufrecht steht. In diese Außenschalung wird eine Innenschalung eingesetzt, die der Innenform des zu fertigenden Rohres entspricht und einen der Wandstärke des Rohres entsprechenden Abstand zur Außenschalung aufweist. In den Zwischenraum wird dann Beton eingefüllt. Nach ausreichendem Aushärten des Betons wird die Außenschale, die üblicherweise zweiteilig ausgebildet ist, entfernt. Ebenso wird die Innenschale entfernt, die hierfür im Durchmesser reduzierbar ausgebildet ist.

Für die Herstellung von Betonrohren mit einem Kunststoffinnenrohr, so genannter Innerliner, wird das Kunststoffrohr auf den Kern, also die Innenschale aufgeschoben. Das Innenrohr verbindet sich mit dem eingefüllten Beton, wobei bei größeren Rohren zur besseren Verankerung Noppen verwendet werden.

Ein Verfahren gemäß dem Oberbegriff von Anspruch 1 ist aus der DE 10 13 560 B bekannt. Weitere derartige Verfahren sind aus der BE 453 127 A und der FR-A-1 328 753 entnehmbar.

Der Erfindung liegt die Aufgabe zugrunde, die Herstellung von Betonrohren mit Kunststoffinnenrohr zu verbessern. Insbesondere soll der Aufwand verringert und die Herstellungszeit verkürzt werden.

Diese Aufgabe wird durch die Merkmale von Anspruch 1 gelöst.

Erfindungsgemäß wird das Betonrohr also liegend gefertigt. Dadurch ergeben sich mehrere Vorteile. Zum einen kann ein Trog als Außenschale verwendet werden, also eine einteilige Form. Des Weiteren ist die Befüllung vereinfacht, da nicht wie beim stehenden Verfahren um den Ringspalt zwischen Außenschale und Innenschale gefüllt werden muss. Vielmehr steht die gesamte Öffnungsbreite des Troges als Füllöffnung zur Verfügung. Die Herstellung ist dadurch bereits deutlich vereinfacht und beschleunigt.

Durch die Verwendung des Kunststoffinnenrohres als Innenschale ergeben sich weitere Vorteile. Zum einen ist es nicht mehr erforderlich, die Innenschale zu entfernen. Zudem entfällt das Reinigen der Innenschale. Der Trog ist außerdem so ausgebildet, dass er sich nach unten stetig verjüngt. Zum einen ist hierdurch ein gutes und vollständiges Befüllen des Troges gewährleistet. Zum anderen ist die Entnahme des fertigen Rohres aus dem Trog erleichtert. Insgesamt ergibt sich daher ein sehr vorteilhaftes Herstellungsverfahren für Betonrohre der genannten Art.

Das Kunststoffinnenrohr, welches zugleich als Innenschale dient, ist bevorzugt über die Endplatten des Troges gehalten. Die Endplatten, die zum Schließen der Außenform an den beiden Enden des Rohres ohnehin erforderlich sind, haben dadurch eine weitere Funktion. Separate Haltemittel können entfallen.

Um das Ausformen des hergestellten Betonrohres zu erleichtern, sind die Endplatten des Troges bevorzugt lösbar ausgebildet. Nach ausreichendem Aushärten des Betons werden die Endplatten entfernt. Das fertige Betonrohr kann dann besonders einfach entnommen werden.

Nach der Entnahme des fertigen Rohres aus dem Trog wird der Trog gereinigt und dann wieder mit den Endplatten verschlossen. Danach kann erneut ein Betonrohr hergestellt werden, wobei wieder als Innenschale ein Kunststoffinnenrohr eingesetzt wird.

Nach einer weiteren Ausgestaltung der Erfindung sind mehrere Tröge zu einer Einheit zusammengefasst und werden gleichzeitig zur Betonrohrherstellung verwendet. Hierdurch kann die Herstellungszeit für ein Betonrohr weiter verkürzt und die Produktivität weiter erhöht werden.

Nach einer besonderen Ausgestaltung der Erfindung ist der Trog ohne Absatz in den beiden Endbereichen ausgebildet. Hierdurch können Betonrohre hergestellt werden, die kein Spitzende und kein Muffenende aufweisen, also gerade ausgebildet sind.

Zur Verbindung derartiger gerader Rohre können in die Stirnseiten der Rohre Bolzen eingesetzt werden. Die Bolzen können entweder in eine Seite des Betonrohres bereits bei der Herstellung eingegossen werden, während am anderen Ende in die Stirnwand entsprechende Aufnahmen eingebracht werden. Eine andere Möglichkeit besteht darin, in beide Enden Bolzenaufnahmen einzubringen und die Bolzen in die fertigen Betonrohre einzusetzen. Hierfür werden nach einer Ausgestaltung der Erfindung in den Stirnwänden des Troges entsprechende Bolzen vorgesehen, die entweder im Betonrohr verbleiben oder nach dem Aushärten aus dem Rohr herausgezogen werden. Auf die Bolzen können auch Kunststoffhülsen aufgesetzt werden, die nach dem Entformen in den Aufnahmen verbleiben und diese auskleiden.

Nach noch einer Ausgestaltung der Erfindung ist das Kunststoffinnenrohr in mindestens einem, bevorzugt beiden Endbereichen radial erweitert, wofür das Betonrohr an seinem zugehörigen Ende einen entsprechenden Absatz aufweist. Eine solche Erweiterung ermöglicht das Einstecken eines Innenrohrstutzens. Dieser dient bei einer muffenfreien Verbindung zweier Rohre zur Abdichtung des Rohrinneren nach außen. Durch die radiale Erweiterung des Kunststoffinnenrohrs kann trotz Innenrohrstutzen ein durchgängiger Innendurchmesser des Betonrohres gewährleistet werden.

Nach einer bevorzugten Ausgestaltung der Erfindung wird in das Kunststoffinnenrohr ein Stützkern für das Kunststoffinnenrohr eingebracht. Dieser Stützkern hat den Vorteil, dass sich das Kunststoffinnenrohr beim Einbringen des Betons in den Trog nicht verformen kann. Das Kunststoffinnenrohr kann dadurch besonders dünn ausgebildet werden, wodurch sich Kostenvorteile ergeben.

Der Stützkern ist insbesondere als Spreizkern ausgebildet, der in das Kunststoffinnenrohr eingebracht und aufgeweitet wird, bevor der Beton eingefüllt wird, und der nach Härten des Betons im Durchmesser wieder reduziert und aus dem Kern entnommen wird. Dadurch ist ein leichtes Einbringen und eine leichte Entnahme des Stützkerns möglich und der Stützkern kann stets wieder verwendet werden.

Der Stützkern besteht bevorzugt aus einem insbesondere geschlitzten Stahl- oder Aluminiumrohr. Diese Materialien haben sich als besonders geeignet herausgestellt.

Das Kunststoffinnenrohr und der Stützkern werden nach einer weiteren Ausgestaltung der Erfindung gemeinsam in den Trog eingebracht und über die Endplatten gehalten. Insbesondere kann das Kunststoffrohr auf den Stützkern aufgeschoben und letzterer dann aufgeweitet werden, bevor beide gemeinsam in den Trog eingesetzt werden. Dort werden sie zunächst mit einer Endplatte verbunden, welche Kunststoffinnenrohr und Stützkern trägt, und danach wird die zweite Endplatte angebracht, welche Kunststoffinnenrohr und Stützkern am anderen Ende hält.

Ausführungsbeispiele der Erfindung sind in der Zeichnung dargestellt und werden nachfolgend beschrieben. Es zeigen, jeweils in schematischer Darstellung
- Fig. 1: eine perspektivische Ansicht auf das erste Ende eines Betonrohres,
- Fig. 2: eine perspektivische Ansicht auf das andere Ende des Betonrohres von Fig. 1,
- Fig. 3: eine Draufsicht auf die Stirnseite des Betonrohres von Fig. 1,
- Fig. 4: einen Schnitt gemäß Linie A-A in Fig. 3,
- Fig. 5: einen Schnitt gemäß Linie B-B in Fig. 3,
- Fig. 6: eine perspektivische Ansicht zweier zusammengefügter Betonrohre,
- Fig. 7: eine perspektivische Ansicht eines Troges zur Herstellung eines erfindungsgemäßen Betonrohres,
- Fig. 8: eine Seitenansicht des Troges von Fig. 7,
- Fig. 9: eine Draufsicht auf die Stirnseite des Troges von Fig. 7,
- Fig. 10: eine Draufsicht auf die Oberseite des Troges von Fig. 7,
- Fig. 11: eine Draufsicht auf einen Trog in einer Variante der Erfindung, und
- Fig. 12: eine Draufsicht auf die Stirnseite des Troges von Fig. 11.

Das in den Figuren dargestellte Betonrohr 1 weist eine im Wesentlichen gerade Unterseite 2 sowie zwei Seiten 3 und 4 auf, die sich zunächst gerade von der Unterseite 2 nach oben und dann bogenförmig aufeinander zu erstrecken, wobei sie in der Mitte des Betonrohres 1 einen Kamm 5 bilden. Im Bereich des Kamms 5 sind in die Oberseite des Betonrohres 1 zwei Tragschlaufen 6 eingesetzt.

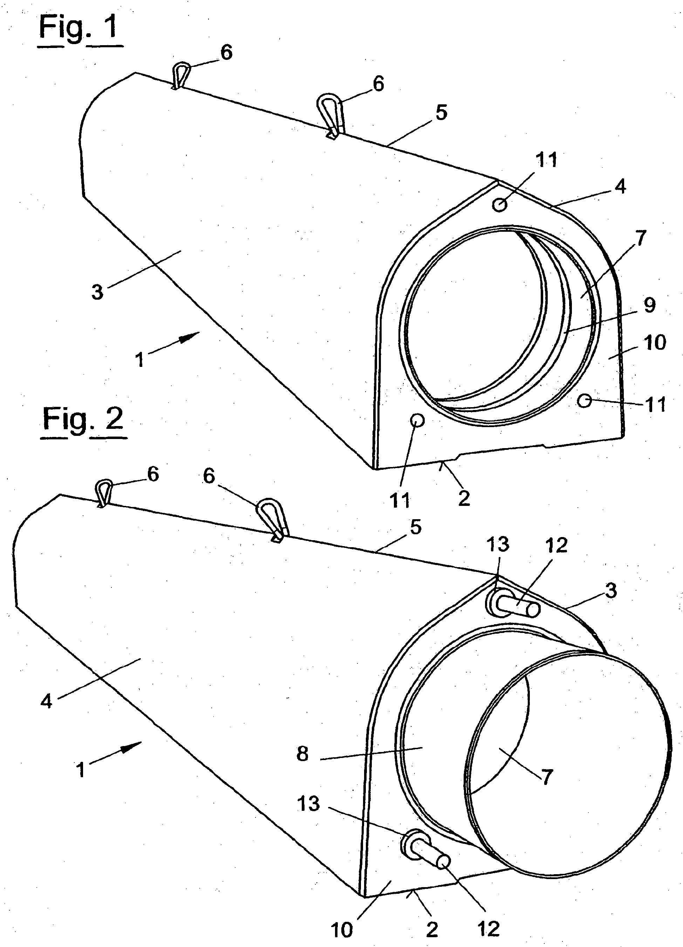

In Fig. 1 erkennt man, dass das Betonrohr 1 einen im Querschnitt kreisförmigen Innendurchmesser aufweist. In das Innere des Betonrohrs 1 ist ein entsprechendes Kunststoffinnenrohr, so genannte Innerliner, 7 eingesetzt. In den beiden Endbereichen ist das Betonrohr 1 und der Innerliner 7 radial erweitert. In diese Erweiterung ist, wie in Fig. 2 dargestellt, ein Innenrohrstutzen 8 eingesetzt. Dieser Innenrohrstutzen 8 erstreckt sich somit bei miteinander gestoßenen Rohren 1 in beide Rohre hinein. Zwischen dem Innenrohrstutzen 8 und dem Innerliner 7 ist, wie in Fig. 1 erkennbar, eine Ringdichtung 9 vorgesehen.

Die beiden Stirnseiten 10 des Betonrohrs 1 sind mit drei Aufnahmen 11 für Bolzen 12 (siehe Fig. 2) versehen. Zwei der Aufnahmen 11 befinden sich im Bereich der Unterseite 2 des Betonrohrs und die dritte Aufnahme im Bereich des Kamms 5. Die Bolzen 12, die in Fig. 2 in die Aufnahmen 11 eingesteckt dargestellt sind, weisen in ihrer Mitte eine ringförmige Erweiterung 13 auf, die als Anschlag dient. Sie bestehen bevorzugt aus Metall und sind mit einer elastischen Beschichtung versehen. Es können auch nur zwei Bolzen eingesteckt werden, insbesondere in die beiden unteren Aufnahmen 11. In die Aufnahmen 11 können auch - hier nicht dargestellte - Kunststoffhülsen eingesetzt sein, um die Aufnahmen 11 auszukleiden, wobei die Hülsen auch aus einem elastischen Material bestehen können.

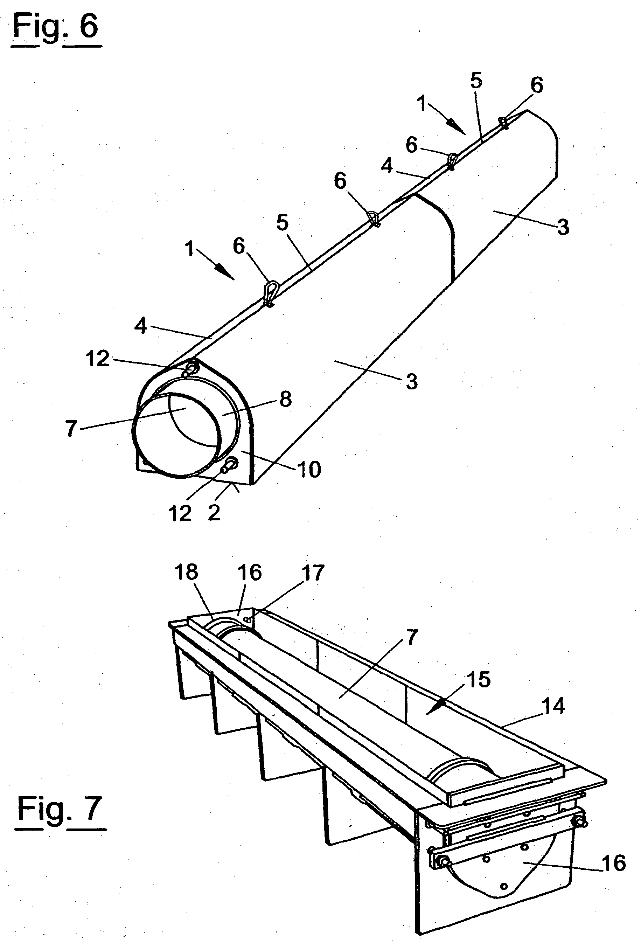

Wie man in Fig. 6 sieht, können durch die Aufnahmen 11 und Bolzen 12 sowie den Innenrohrstutzen 8 Betonrohre 1 miteinander gestoßen werden, ohne dass die Betonrohre ein Spitzende und ein Muffenende aufweisen müssen. Die Rohre sind vielmehr, wie dargestellt, über ihre Länge mit gleich bleibendem Außenumfang ausgebildet. Die Kräfte zwischen den Rohren 1 werden vor allem durch die Bolzen 12 aufgenommen, die zugleich eine exakte Positionierung der Rohre 1 zueinander gewährleisten. Die Abdichtung des Rohrinneren nach außen erfolgt über die Innenrohrstutzen 8 und die Dichtringe 9.

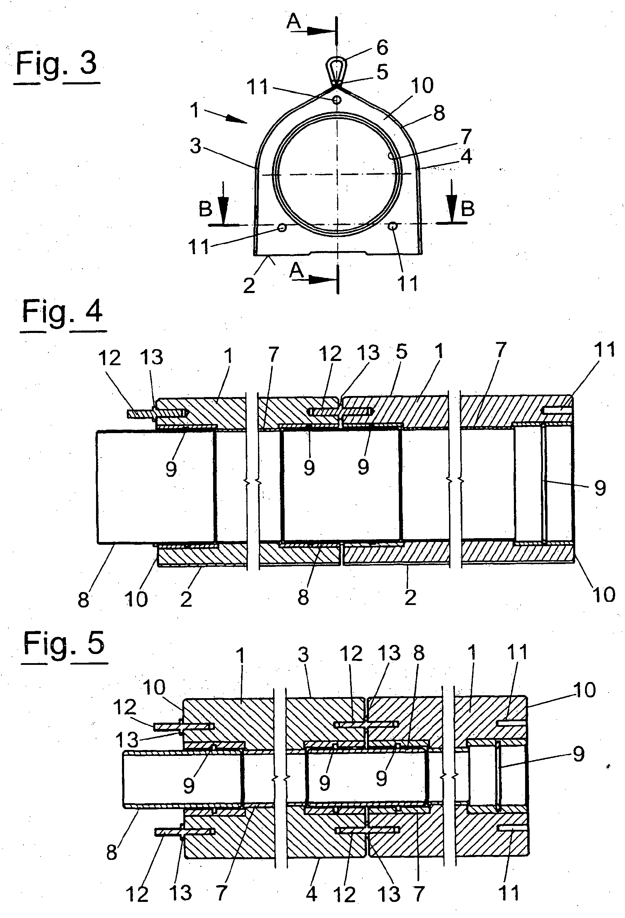

Fig. 7 zeigt eine Form zur Herstellung des in den Fig. 1 bis 6 dargestellten Betonrohrs. Die Form umfasst einen Trog 14 mit einer oberen Öffnung 15. Nach unten hin verjüngt sich der Trog 14 stetig entsprechend der Außenform des Betonrohrs 1.

An den Stirnseiten weist der Trog 14 Endplatten 16 auf, die lösbar mit dem Trog 14 verbindbar sind. In den Endplatten sind vorstehende Bolzen 17 vorgesehen, welche den Aufnahmen 11 in den Endplatten des Betonrohrs 11 entsprechen. Auf die Bolzen 17 können - hier nicht dargestellte - Kunststoffhülsen aufgesetzt werden, die beim Entformen des Betonrohres 7 in den Aufnahmen 11 verbleiben und diese auskleiden. Außerdem weisen die Endplatten 16 Halterungen 18 für das Kunststoffinnenrohr 7 auf, über welche das Kunststoffinnenrohr 7 als Innenschale gehalten werden kann.

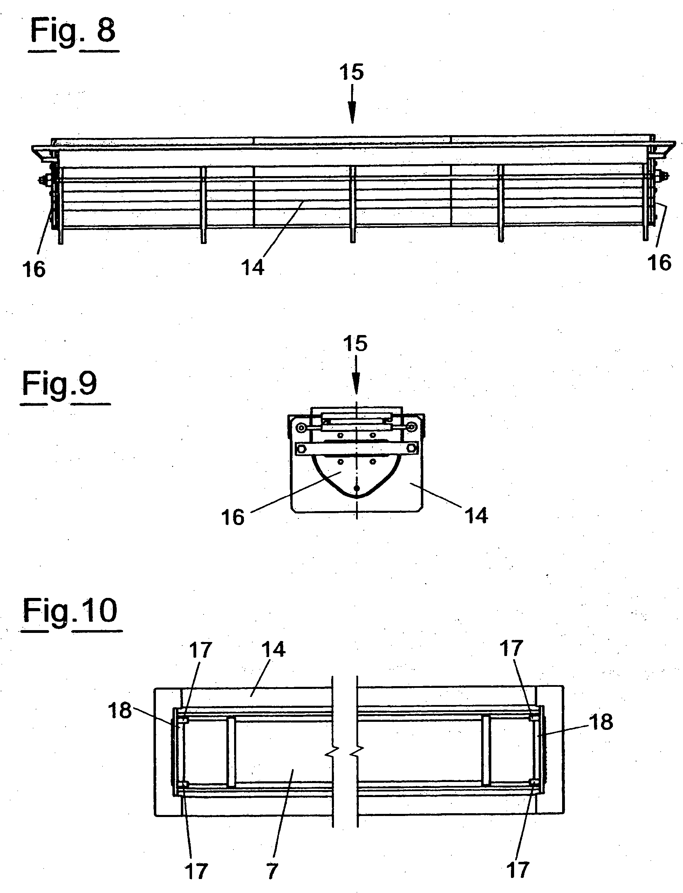

Nach Anbringung der Endplatten 16 mit eingesetztem Kunststoffinnenrohr 7 ist die in den Fig. 7 bis 10 dargestellte Form bereits für die Herstellung bereit. Von oben wird in die Öffnung 15 fließfähiger Beton eingegeben, der um das Kunststoffinnenrohr 7 herum fließt, und den gesamten Trog 14 ausfüllt. Der Beton wird bis über das Kunststoffinnenrohr 7 aufgefüllt, insbesondere bis zum oberen Rand des Troges 14. Nach ausreichendem Aushärten des Betons werden die Endplatten 16 gelöst und das fertige Betonrohr 1 zusammen mit dem Innenrohr 7 entnommen. Nach Reinigen des Troges 14 und der Endplatten 16 kann der Herstellungsprozess von neuem beginnen.

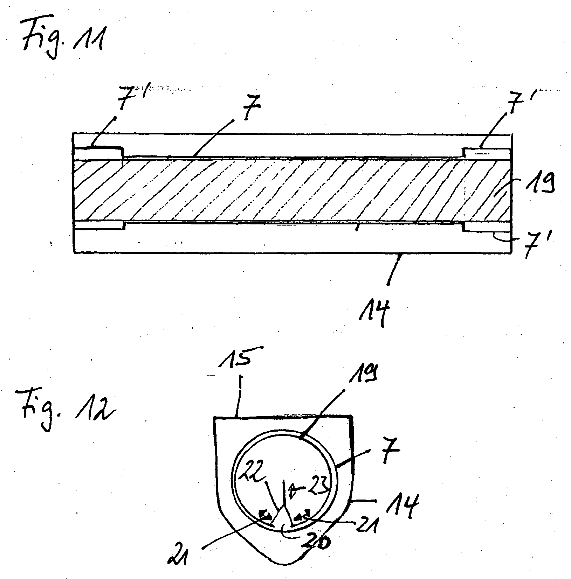

Bei der in Fig. 11 und 12 dargestellten Variante ist innerhalb des Kunststoffinnenrohres ein Spreizkern 19 vorhanden, der das Kunststoffinnenrohr 7 abstützt. Der Spreizkern 19 wird zusammen mit dem Kunststoffinnenrohr 7 von den beiden hier nicht dargestellten Endplatten getragen. Der Spreizkern 19 besteht beispielsweise aus einem Stahl- oder Aluminiumrohr, welches mit einem Längsschlitz 20 versehen ist. Dadurch kann der Spreizkern 19 im Durchmesser vergrößert und verkleinert werden, welches in Fig. 12 durch Pfeile 21 angedeutet ist. Die Vergrößerung und Verkleinerung des Durchmessers des Spreizkerns 19 erfolgt in bekannter Weise, beispielsweise durch zur Mitte des Spreizkerns 19 verlaufende Schenkel 22, die gemäß Pfeil 23 hin und her bewegbar sind.

In Fig. 11 erkennt man außerdem, dass das Kunststoffinnenrohr 7 an seinen beiden Enden jeweils eine Aufweitung 7' aufweist. Diese dient wie zuvor beschrieben dazu, einen Innenrohrstutzen 8 aufzunehmen.

Wie sich aus dem Vorstehenden ergibt, ist die liegende Fertigung gemäß dem erfindungsgemäßen Verfahren besonders schnell und einfach möglich. Dadurch ergeben sich eine hohe Produktivität und geringe Kosten. Als Beton wird bevorzugt selbst verdichtender Beton verwendet. Es kann aber auch herkömmlicher Beton verwendet werden, wobei die Form 14 dann nach Einfüllen des Betons gerüttelt wird. Die Ausschalung kann je nach Betonart im Wesentlichen unmittelbar nach dem Auffüllen des Troges 14 oder erst nach einer entsprechenden Trockenzeit erfolgen. Außerdem können mehrere Tröge 14 zu Einheiten zusammengefasst werden, so dass gleichzeitig mehrere Betonrohre 1 gefertigt werden können. Die Tröge 14 werden dann durch eine entsprechende Vorrichtung gleichzeitig mit Beton befüllt. Die Fertigungszeit eines Rohres kann dadurch nochmals weiter verkürzt werden.

Durch die Fertigung mit einem Trog 14 ergibt sich außerdem der Vorteil, dass eine gerade Seite erhalten wird. Diese Seite kann als Unterseite 2 des Rohres 1 dienen, welches dadurch auf einer ebenen Fläche gut abstützbar ist. Damit ist auch die Herstellung von Gräben für die erfindungsgemäßen Betonrohre 1 erleichtert.

### Bezugszeichenliste

- 1: Betonrohr
- 2: Unterseite
- 3: Seitenfläche
- 4: Seitenfläche
- 5: Kamm
- 6: Tragschlaufe
- 7: Kunststoffinnenrohr
- 8: Innenrohrstutzen
- 9: Dichtungsring
- 11: Aufnahme
- 12: Bolzen
- 13: Erweiterung von 12
- 14: Trog
- 15: Öffnung von 14
- 16: Endplatte
- 17: Bolzen
- 18: Alterung
- 19: Spreizkern
- 20: Schlitz
- 21: Pfeil
- 22: Schenkel
- 23: Pfeil

## Patentansprüche

1. Verfahren zur Herstellung von Betonrohren, insbesondere für Abwasserleitungen, mit einem Kunststoffinnenrohr (7), bei welchem das Betonrohr (1) liegend gefertigt wird, wobei als Außenschale ein Trog (14) dient, das Kunststoffinnenrohr (7) in dem Trog (14) horizontal gehalten wird und dann der Trog mit fließfähigem Beton bis über das Kunststoffrohr (7) aufgefüllt wird, wobei das Kunststoffrohr (7) als Innenschale dient und nach dem Aushärten des Betons im Betonrohr (1) verbleibt,
**dadurch gekennzeichnet, dass**
der Trog (14) sich nach unten stetig verjüngt.

2. Verfahren nach Anspruch 1,
**dadurch gekennzeichnet, dass**
das Kunststoffinnenrohr (7) über die Endplatten (16) des Troges (14) gehalten wird.

3. Verfahren nach Anspruch 1 oder 2,
**dadurch gekennzeichnet, dass**
die Endplatten (16) des Troges (14) lösbar ausgebildet sind und dass die Endplatten (16) nach ausreichendem Aushärten des Betons entfernt werden, wobei, bevorzugt, die Betonrohre (1) nach Entfernen der Endplatten (16) und ausreichendem Aushärten aus dem Trog (14) entnommen werden und der Trog (14) sodann gereinigt und mit den Endplatten (16) verschlossen wird.

4. Verfahren nach einem der vorhergehenden Ansprüche,
**dadurch gekennzeichnet, dass** der Trog (14) mit selbst verdichtendem Beton gefüllt wird und/oder mehrere Tröge (14) zu einer Einheit zusammengefasst und gleichzeitig mit Beton gefüllt werden und/oder der Trog (14) ohne Absatz in den beiden Endbereichen ausgebildet ist.

5. Verfahren nach einem der vorhergehenden Ansprüche,
**dadurch gekennzeichnet, dass** in mindestens einer Endplatte (16), bevorzugt in beiden Endplatten (16) des Troges zum Troginneren weisende und außerhalb des Kunststoffinnenrohres (7) verlaufende Bolzen (17) vorgesehen sind, wobei, bevorzugt, auf die Bolzen (17) Kunststoffhülsen aufgesetzt werden, die beim Entformen des Kunststoffrohres (7) in dem Rohr (7) verbleiben.

6. Verfahren nach einem der vorhergehenden Ansprüche,
**dadurch gekennzeichnet, dass** das Kunststoffinnenrohr (7) in mindestens einem, bevorzugt beiden Endbereichen radial erweitert ist, wofür das Betonrohr (1) an seinem jeweils zugehörigen Ende einen entsprechenden Absatz aufweist.

7. Verfahren nach einem der vorhergehenden Ansprüche,
**dadurch gekennzeichnet, dass** in das Kunststoffinnenrohr (7) ein Stützkern (19) für das Kunststoffinnenrohr (7) eingebracht wird, wobei der Stützkern (19) bevorzugt als Spreizkern ausgebildet ist, der in das Kunststoffinnenrohr (7) eingebracht und aufgeweitet wird, bevor der Beton eingefüllt wird, und der nach Härten des Betons im Durchmesser wieder reduziert und aus dem Kunststoffinnenrohr (7) entnommen wird.

8. Verfahren nach Anspruch 7,
**dadurch gekennzeichnet, dass** der Stützkern (19) aus einem insbesondere geschlitzten Stahl- oder Aluminiumrohr gebildet ist und/oder das Kunststoffinnenrohr (7) und der Stützkern (19) gemeinsam in den Trog (14) eingebracht und über die Endplatten (16) gehalten werden.

## Claims

1. A method for the manufacture of concrete pipes, in particular for waste water pipework, having a plastic inner pipe (7), in which the concrete pipe (1) is produced in a lying manner, with a trough (14) serving as an outer shell, the plastic inner pipe (7) is held horizontal in the trough (14), and the trough is then filled with flowable concrete up to and above the plastic pipe (7), with the plastic pipe (7) serving as an inner shell and remaining in the concrete pipe (1) after the hardening of the concrete,
**characterized in that**
the trough (14) converges constantly downwardly.

2. A method in accordance with claim 1,
**characterized in that**
the plastic inner pipe (7) is held via the end plates (16) of the trough (14).

3. A method in accordance with claim 1 or claim 2,
**characterized in that**
the end plates (16) of the trough (14) are made releasable; and **in that** the end plates (16) are removed after sufficient hardening of the concrete, wherein, preferably, the concrete pipes (1) are removed from the trough (14) after removal of the end plates (16) and after sufficient hardening; and **in that** the trough (14) is then cleaned and closed by the end plates (16).

4. A method in accordance with any one of the preceding claims,
**characterized in that**
the trough (14) is filled with self-compacting concrete; and/or **in that** a plurality of troughs (14) are combined to a unit and are filled with concrete simultaneously; and/or **in that** the trough (14) is made without a step in the two end regions.

5. A method in accordance with any one of the preceding claims,
**characterized in that**
pins (17) which face toward the trough interior and which extend outside the plastic inner pipe (7) are provided in at least one end plate (16), preferably in both end plates (16), of the trough, wherein, preferably, plastic sleeves which remain in the pipe (7) on the demolding of the plastic pipe (7) are placed onto the pins (17).

6. A method in accordance with any one of the preceding claims,
**characterized in that**
the plastic inner pipe (7) is radially expanded in at least one end region, preferably in both end regions, for which purpose the concrete pipe (1) has a corresponding step at its respective associated end.

7. A method in accordance with any one of the preceding claims,
**characterized in that**
a support core (19) for the plastic inner pipe (7) is introduced into the plastic inner pipe (7), wherein the support core (19) is preferably made as a spreading core which is introduced into the plastic inner pipe (7) and is expanded before the concrete is poured in and which is reduced in diameter again after the hardening of the concrete and is removed from the plastic inner pipe (7).

8. A method in accordance with claim 7,
**characterized in that**
the support core (19) is formed from a steel pipe or aluminum pipe, in particular slotted; and/or **in that** the plastic inner pipe (7) and the support core (19) are introduced into the trough (14) together and are held via the end plates (16).

## Revendications

1. Procédé pour la fabrication de tubes en béton, en particulier pour des conduits d'eaux usées, comprenant un tube intérieur en matière plastique (7), dans lequel le tube en béton (1) est fabriqué horizontalement, dans lequel on utilise comme coque extérieure une auge (14), le tube intérieur en matière plastique (7) est retenu horizontal dans l'auge (14) et l'auge est alors remplie avec du béton liquide jusqu'au-dessus du tube en matière plastique (7), de sorte que le tube en matière plastique (7) sert de coque intérieure et demeure dans le tube en béton (1) après la prise du béton,
**caractérisé en ce que** l'auge (14) va continuellement en se rétrécissant vers le bas.

2. Procédé selon la revendication 1,
**caractérisé en ce que** le tube intérieur en matière plastique (7) est retenu au moyen des plaques terminales (16) de l'auge (14).

3. Procédé selon la revendication 1 2,
**caractérisé en ce que** les plaques terminales (16) de l'auge (14) sont réalisées détachables, et **en ce que** les plaques terminales (16) sont enlevées après prise suffisante du béton et les tubes en béton (1) sont de préférence, après avoir enlevé les plaques terminales (16) et prise suffisante du béton, enlevés hors de l'auge (14) et l'auge (14) est alors nettoyée et refermée avec les plaques terminales (16).

4. Procédé selon l'une des revendications précédentes,
**caractérisé en ce que** l'auge (14) est remplie avec un béton qui se compacte de lui-même et/ou **en ce que** plusieurs auges (14) sont regroupées en une unité et sont remplies simultanément avec du béton, et/ou **en ce que** l'auge (14) est réalisée sans prolongement dans les deux zones terminales.

5. Procédé selon l'une des revendications précédentes,
**caractérisé en ce que** dans au moins une plaque terminale (16) et de préférence dans les deux plaques terminales (16) de l'auge il est prévu des boulons (17) dirigés vers l'intérieur de l'auge et s'étendant à l'extérieur du tube intérieur en matière plastique (7) et des douilles en matière plastique sont de préférence coiffées sur les boulons (17), celles-ci demeurant dans le tube (7) lors du démoulage du tube en matière plastique (7).

6. Procédé selon l'une des revendications précédentes,
**caractérisé en ce que** le tube intérieur en matière plastique (7) est élargi radialement dans au moins une zone terminale et de préférence dans les deux zones terminales, ce pourquoi le tube en béton (1) comprend à son extrémité respectivement associée un prolongement correspondant.

7. Procédé selon l'une des revendications précédentes,
**caractérisé en ce qu'**un noyau de soutien (19) pour le tube intérieur en matière plastique (7) est introduit dans le tube intérieur en matière plastique (7), ledit noyau de soutien (19) étant de préférence réalisé sous forme de noyau à écartement, qui est introduit dans le tube intérieur en matière plastique (17) et qui est élargi avant de remplir le béton, dont on réduit à nouveau le diamètre après prise du béton, et que l'on enlève hors du tube intérieur en matière plastique.

8. Procédé selon la revendication 7,
**caractérisé en ce que** le noyau de soutien (19) est réalisé à partir d'un tube en acier ou en aluminium, en particulier fendu, et/ou **en ce que** le tube intérieur en matière plastique et le noyau de soutien sont introduits conjointement dans l'auge (14) et sont retenus via les plaques terminales (16).
